# EUROPÄISCHE PATENTANMELDUNG

(11) **EP 2 910 499 A1**
(43) Veröffentlichungstag der Anmeldung: **26.08.2015**
(21) Anmeldenummer: 15155107.4
(22) Anmeldetag: 13.02.2015
(51) Int. Cl.: B65G 19/02, B61B 10/02

(54) **Transportsystem und Verfahren zum Transportieren von Hängeartikeln**

(30) Priorität: 24.02.2014 DE 102014203239
(71) Anmelder: Dürkopp Fördertechnik GmbH, 33719 Bielefeld (DE)
(72) Erfinder: Wend, Michael, 33619 Bielefeld (DE); Janzen, Paul, 33619 Bielefeld (DE)
(74) Vertreter: Rau, Schneck & Hübner Patentanwälte Rechtsanwälte PartGmbB

(57) **Zusammenfassung**

Die Erfindung betrifft ein Transportsystem zum Transportieren von Hängeartikeln umfassend ein eine Transportrichtung (5) vorgebendes Transportmittel (9), mehrere entlang der Transportrichtung (5) an dem Transportmittel (9) transportierbare Halteelemente (12) zum Aufnehmen von Hängeartikeln (2), und mindestens eine Vereinzelungseinrichtung (8a) zum Vereinzeln der Halteelemente (12). Die Vereinzelungseinrichtung (8a) weist mindestens ein Vereinzelungsmittel auf, wobei die Halteelemente (12) mittels der Vereinzelungseinrichtung (8a) entlang der Transportrichtung (5) von einer unbestimmten Anordnung in eine vereinzelte Anordnung, in welcher ein vorgegebener Abstand zwischen den zwei benachbarten Haltelementen (12) vorliegt, überführbar sind. Der zweite Abstand ist größer als der erste Abstand. Es wirkt jeweils ein Vereinzelungsmittel mit mindestens einem Halteelement (12) zur Überführung von einer unbestimmten Anordnung in die vereinzelte Anordnung zusammen.

## Beschreibung

Die Erfindung betrifft ein Transportsystem sowie ein Verfahren zum Transportieren von Hängeartikeln, insbesondere von an Bügeln aufgehängter Kleidung.

Fördersysteme zur automatischen Förderung von Hängeartikeln sind grundsätzlich bekannt. Bekannte Fördersysteme umfassen im Wesentlichen einen Staubereich und einen Förderbereich. In dem Staubereich sind die Hängeartikel gestaut und weisen entlang der Transportrichtung einen geringen ersten Abstand zueinander auf. Die entlang des Förderbereichs transportierten Hängeartikel weisen einen entlang einer Transportrichtung orientierten zweiten Abstand auf. Es sind Vereinzelungseinrichtungen bekannt, mittels denen zwischen dem Staubereich und dem Förderbereich Hängeartikel vereinzelt werden können. Mittels Vereinzelungseinrichtungen ist der Abstand zwischen zwei benachbarten Hängeartikeln vergrößerbar. Eine Vergrößerung des Abstands zwischen zwei Hängeartikeln wurde bisher durch eine pneumatisch angetriebene, lineare Hin- und Herbewegung eines Vereinzelungsmittels quer zur Transportrichtung der Hängeartikel erreicht. Wobei durch bekannte Vereinzelungsmittel ein im Staubereich gestauter Hängeartikel solange zurückgehalten wird, bis ein Abstand zu einem in Transportrichtung benachbarten und bereits freigegebenen Hängeartikel ausreichend groß ist. Einer derartigen linearen Bewegung des Vereinzelungsmittels sind aber physikalisch und auch bezüglich einer Geräuschbelastung Grenzen gesetzt.

Es ist eine Aufgabe der vorliegenden Erfindung, ein Transportsystem zum Transportieren von Hängeartikeln derart zu verbessern, dass eine deutlich höhere Vereinzelungsleistung bei gleichzeitig zuverlässigem Betrieb möglich ist.

Diese Aufgabe ist durch ein Transportsystem mit den Merkmalen des Anspruchs 1 gelöst. Ein Transportsystem zum Transportieren von Hängeartikeln umfasst ein eine Transportrichtung vorgebendes Transportmittel, mehrere entlang der Transportrichtung an dem Transportmittel transportierbare Halteelemente, die als Hängeadapter zum Aufnehmen von Hängeartikeln dienen, insbesondere jeweils eines Hängeartikels, und mindestens eine Vereinzelungseinrichtung zum Vereinzeln der Halteelemente. Die Halteelemente sind insbesondere als Rolladapter ausgeführt, wie sie an sich aus DE 10 2005 006 455 A1 bekannt sind. Wesentlich ist also, dass das Transportsystem das Vereinzeln der Halteelemente selbst ermöglicht. An einem Halteelement ist mindestens ein, insbesondere genau ein, Kleiderbügel gehalten. Mittels der Halteelemente werden die Kleiderbügel mittelbar vereinzelt. Ein unmittelbares Vereinzeln der Kleiderbügel ist entbehrlich. Das Transportsystem ist unaufwendig ausgeführt. Das Transportsystem ist insbesondere unabhängig von der konkreten Ausgestaltung der Kleiderbügel, insbesondere deren Breite und/oder Höhe. Die Halteelemente sind insbesondere jeweils identisch ausgeführt und weisen vorbekannte Maße auf. Die Handhabung der vorbekannten Halteelemente kann robust, d. h. fehlerunanfällig, und mit erhöhter Durchsatzrate durchgeführt werden. Die Vereinzelungseinrichtung weist mindestens ein Vereinzelungsmittel auf, wobei die Halteelemente mittels der Vereinzelungseinrichtung entlang der Transportrichtung von einer unbestimmten Anordnung, in welcher ein erster, insbesondere unbekannter, Abstand zwischen zwei benachbarten Hängeartikeln vorliegt, in eine vereinzelte Anordnung, in welcher ein zweiter, vorgegebener Abstand zwischen den zwei benachbarten Hängeartikeln vorliegt, überführbar sind. Der vorgegebene Abstand kann einstellbar sein. Das bedeutet, dass in Abhängigkeit beispielsweise der zu transportierenden Waren und/oder der Halteelemente der vorgegebene zweite Abstand verändert werden kann. Der vorgegebene Abstand ergibt sich insbesondere infolge einer Anordnung des mindestens einen Vereinzelungsmittels an der Vereinzelungseinrichtung. Dadurch, dass der zweite Abstand ein vorgegebener Abstand ist, befinden sich die Halteelemente während der Vereinzelung an der Vereinzelungseinrichtung in einer definierten Position und sind insbesondere gleich beabstandet zueinander angeordnet. Der Abstand zwischen den Halteelementen ist vorgegeben und bekannt. Dadurch ist insbesondere die Identifikation der Halteelemente und/oder der daran befindlichen Hängewaren vereinfacht. Dadurch, dass das Vereinzeln der Halteelemente durch die Vereinzelungsmittel realisiert ist, ist das Vereinzeln konstruktiv unaufwendig gelöst. Die Vereinzelungsleistung ist erhöht. Der zweite Abstand kann größer sein als der erste Abstand. Insbesondere ist der erste Abstand unbekannt und insbesondere unregelmäßig. Der erste Abstand, mit dem die Halteelemente vor der Vereinzelungseinrichtung angeordnet sind, hängt im Wesentlichen von den an den Halteelementen befestigten Hängewaren ab. Sofern an den Halteelementen Hängewaren mit jeweils parallel zur Transportrichtung orientierter Dicke angeordnet sind, weisen die Halteelemente jeweils unterschiedliche, also unbestimmte und insbesondere unbekannte erste Abstände zueinander auf. Wesentlich ist also, dass die zuvor in der unbestimmten Anordnung vorliegenden Halteelemente mit unbekannten Abständen zwischen zwei benachbarten Halteelementen durch das erfindungsgemäße Transportsystem derart vereinzelt werden, dass ein Abstand zwischen zwei benachbarten Halteelementen während des Vereinzelns vereinheitlicht ist. Der vereinheitlichte Abstand ist insbesondere unabhängig von der an dem Halteelement transportierten Hängeware einstellbar. Insbesondere ermöglicht die Vereinzelungseinrichtung, dass ein erstes Halteelement aktiv gefördert wird. Dazu wird das Halteelement mit dem Vereinzelungsmittel der Vereinzelungseinrichtung transportiert. Gleichzeitig wird ein zweites, dem ersten, transportierten Halteelement nachfolgendes Halteelement an der Vereinzelungseinrichtung zurückgehalten. Das Zurückhalten erfolgt solange, bis das zweite Halteelement mit einem dafür vorgesehenen Vereinzelungsmittel der Vereinzelungseinrichtung transportiert wird. Die Vereinzelungseinrichtung weist eine Transportfunktion auf. Die Vereinzelungseinrichtung weist eine Rückhaltefunktion auf. Dadurch, dass ein Vereinzelungsmittel mit einem Halteelement zur Überführung von einer aufgereihten Anordnung in die vereinzelte Anordnung zusammenwirkt, wird eine Vereinzelung während einer Endlosförderung der Halteelemente erreicht, wobei eine Vereinzelungsleistung durch gezielte Ansteuerung der Vereinzelungseinrichtung, insbesondere durch Erhöhung einer Bewegungsgeschwindigkeit des mindestens einen Vereinzelungsmittels, einstellbar ist. Vorteilhafterweise ist mehr als ein Vereinzelungsmittel vorgesehen, wobei sich die Vereinzelungsmittel periodisch bewegen und nacheinander jeweils mit einem Halteelement zur Überführung von der aufgereihten Anordnung in die vereinzelte Anordnung zusammenwirken. Die Vereinzelungseinrichtung ist vorteilhafterweise derart gestaltet, dass sich die Vereinzelungsmittel kontinuierlich relativ zum Transportmittel bewegen, wodurch die Vereinzelungsmittel kontinuierlich mit den Halteelementen zusammenwirken können. Es ist von Vorteil, wenn ein sicheres Zusammenwirken zwischen den Vereinzelungsmitteln und den Halteelementen durch die geometrische Gestaltung der Vereinzelungsmittel erreicht wird. Unter einem Zusammenwirken ist zu verstehen, dass die Vereinzelungseinrichtung über das mindestens eine Vereinzelungsmittel mit jeweils mindestens einem Halteelement in direkten oder indirekten physischen Kontakt tritt und so das jeweilige Halteelement von der aufgereihten Anordnung in die vereinzelte Anordnung überführt. Das mindestens eine Vereinzelungsmittel fördert das jeweilige Halteelement aktiv. Während seiner Bewegung bewegt das jeweilige Vereinzelungsmittel das jeweilige Haltelement aktiv entlang der Transportrichtung von der aufgereihten Anordnung in die vereinzelte Anordnung. Die Vereinzelungsmittel können sich entlang einer im Wesentlichen kreisförmigen oder linearen Vereinzelungsrichtung bewegen. Die Vereinzelungsrichtung kann sich ferner in einer im Wesentlichen horizontalen oder in einer im Wesentlichen vertikalen Ebene erstrecken.

Ein Transportsystem nach Anspruch 2 ermöglicht ein periodisches Zusammenwirken der Halteelemente mit dem mindestens einen Vereinzelungsmittel der Vereinzelungseinrichtung im Rahmen einer Endlosförderung der Halteelemente.

Ein Transportsystem nach Anspruch 3 ermöglicht ein gezieltes und steuerbares Zusammenwirken des mindestens einen Vereinzelungsmittels mit den Halteelementen.

Ein Transportsystem nach Anspruch 4 ermöglicht einen Antrieb des mindestens einen Vereinzelungsmittels unabhängig von einem Antrieb des Transportmittels, wodurch die Bewegung des Vereinzelungsmittels einerseits und die Bewegung des Transportmittels andererseits unabhängig voneinander steuerbar sind.

Ein Transportsystem nach Anspruch 5 ermöglicht eine konstruktiv einfache und energiesparende Lösung des Transportsystems, da für einen Antrieb des Transportmittels einerseits und für den Antrieb des mindestens einen Vereinzelungsmittels nur ein Antriebsmittel notwendig ist.

Ein Transportsystem nach Anspruch 6 ermöglicht eine hohe Vereinzelungsleistung bei sehr geringem Platzbedarf für die Vereinzelungseinrichtung. Es ist von Vorteil, wenn die Vereinzelungseinrichtung ein rotierendes Vereinzelungsrad aufweist. Das Vereinzelungsrad ist mit dem mindestens einen Vereinzelungsmittel versehen. Eine Rotationsgeschwindigkeit des Vereinzelungsrades um die Rotationsachse und die Anzahl der Vereinzelungsmittel gibt die Vereinzelungsleistung vor. Vorteilhafterweise sind alle Vereinzelungsmittel identisch ausgebildet. Beispielsweise umfassen alle Vereinzelungsmittel einen kreisförmigen Durchbruch am radialen Außenumfang des rotierenden Vereinzelungsrades. Das Vereinzelungsrad kann auch speichenförmig ausgeführt sein.

Ein Transportsystem nach Anspruch 7 ermöglicht ein gezieltes Zusammenwirken des mindestens einen Vereinzelungsmittels mit jeweils einem der Halteelemente. Vorteilhafterweise nimmt das mindestens eine Vereinzelungsmittel entlang dessen Bewegung auf der Kreisbahn eines der Halteelemente abschnittsweise mit.

Ein Transportsystem nach Anspruch 8 schafft auf konstruktiv besonders einfache Art und Weise die Möglichkeit eines taktweisen Zusammenwirkens jeweils eines Vereinzelungsmittels mit einem Halteelement.

Ein Transportsystem nach Anspruch 9 ermöglicht eine besonders einfache Abstimmung der Bewegung des mindestens einen Vereinzelungsmittels relativ zum Transportmittel.

Ein Transportsystem nach Anspruch 10 gewährleistet einerseits eine sichere Mitnahme eines ersten Halteelements in Transportrichtung und andererseits eine sichere Zurückhaltung und Ausrichtung eines zweiten Halteelements. Das mindestens eine Vereinzelungsmittel wirkt zum einen mit jeweils einem Halteelement zur Überführung von der aufgereihten Anordnung in die vereinzelte Anordnung und zum anderen mit jeweils einem Halteelement zu dem Zwecke, das Halteelement in der aufgereihten Anordnung zu halten, zusammen. Das Zusammenwirken zur Überführung eines Halteelements von der aufgereihten Anordnung in die vereinzelte Anordnung und das Zusammenwirken zur Zurückhaltung eines anderen Halteelements ist durch ein und dasselbe Vereinzelungsmittel vorzugsweise zeitgleich ermöglicht.

Eine weitere Aufgabe der Erfindung ist es, ein Verfahren zum Transportieren von Hängeartikeln bereitzustellen, durch welches eine deutlich höhere Vereinzelungsleistung einer Vereinzelungseinrichtung bei gleichzeitig zuverlässigem Betrieb ermöglicht wird.

Diese Aufgabe ist durch ein Verfahren mit den Merkmalen des Anspruchs 11 gelöst. Durch Bereitstellen eines Transportmittels zum Transportieren von Halteelementen, die als Hängeadapter dienen, die zum Aufnehmen von Hängeartikeln, insbesondere jeweils eines Hängeartikels, dienen, durch Transportieren der Halteelemente entlang der Transportrichtung zu einer Vereinzelungseinrichtung und durch Vereinzeln der Halteelemente durch Überführen der Hängeartikel mittels der Vereinzelungseinrichtung derart, dass zwischen zwei benachbarten Halteelementen ein vorgesehener Abstand vorliegt, wird ein gezieltes Zusammenwirken der Vereinzelungseinrichtung mit den Halteelementen ermöglicht, wobei eine Vereinzelungsleistung vorzugsweise mittels Ansteuerung der Vereinzelungseinrichtung steuerbar ist.

Ein Verfahren nach Anspruch 12 gewährleistet ein periodisches Zusammenwirken jeweils mindestens eines Vereinzelungsmittels mit einem der Halteelemente, wodurch Abstände zwischen jeweils zwei entlang der Transportrichtung benachbarten Halteelementen einstellbar sind.

Ein Verfahren nach Anspruch 13 ist konstruktiv besonders einfach und energiesparend.

Ein Verfahren nach Anspruch 14 ermöglicht eine platzsparende Gestaltung der Vereinzelungseinrichtung.

Weitere Merkmale, Vorteile und Einzelheiten der Erfindung ergeben sich aus der nachfolgenden Beschreibung von Ausführungsbeispielen. Es zeigen:
- Fig. 1: eine schematische Draufsicht auf ein Transportsystem gemäß der Erfindung,
- Fig. 2: eine ausschnittsweise Seitenansicht des Transportsystems gemäß Fig. 1 mit einer ersten Ausführungsvariante einer Vereinzelungseinrichtung,
- Fig. 3: eine Draufsicht auf den Abschnitt des Transportsystems gemäß Fig. 2,
- Fig. 4: eine Schnittdarstellung gemäß Schnittlinie IV-IV in Fig. 2,
- Fig. 5: eine ausschnittsweise Seitendarstellung des Transportsystems gemäß Fig. 2 gemäß einer zweiten Ausführungsvariante einer Vereinzelungseinrichtung,
- Fig. 6: eine Ansicht des Transportsystems gemäß Fig. 5 von oben, wobei sich ein Vereinzelungsmittel der Vereinzelungseinrichtung in einer ersten Position befindet,
- Fig. 7: eine zu Fig. 6 ähnliche Darstellung, wobei sich das Vereinzelungsmittel in einer zweiten Position befindet und mit einem Halteelement zusammenwirkt,
- Fig. 8: eine zu Fig. 6 und Fig. 7 ähnliche Darstellung des Transportsystems, wobei sich das Vereinzelungsmittel in einer dritten Position befindet und mit dem Halteelement zusammenwirkt,
- Fig. 9: eine dritte Ausführungsvariante einer Vereinzelungseinrichtung mit einem Vereinzelungsmittel, welches mit zwei Halteelementen zusammenwirkt, in einer ersten Position,
- Fig. 10: eine zu Fig. 9 ähnliche Darstellung der dritten Ausführungsvariante der Vereinzelungseinrichtung mit dem Vereinzelungsmittel und den Haltelementen in einer zweiten Position,
- Fig. 11: eine zu Fig. 9 und Fig. 10 ähnliche Darstellung der dritten Ausführungsvariante der Vereinzelungseinrichtung, wobei sich das Vereinzelungsmittel und die Halteelemente in einer dritten Position befinden,
- Fig. 12: eine ausschnittsweise Darstellung einer vierten Ausführungsvariante einer Vereinzelungseinrichtung, wobei sich ein Vereinzelungsmittel in einer ersten Position befindet, in welcher es nicht mit Halteelementen zusammenwirkt,
- Fig. 13: eine zu Fig. 12 ähnliche Darstellung, wobei sich das Vereinzelungsmittel in einer zweiten Position befindet, kurz bevor es mit den Haltelementen zusammenwirkt, und
- Fig. 14: eine zu Fig. 12 und Fig. 13 ähnliche Darstellung, wobei sich das Vereinzelungsmittel in einer dritten Position, zwischen den Haltelementen, befindet.

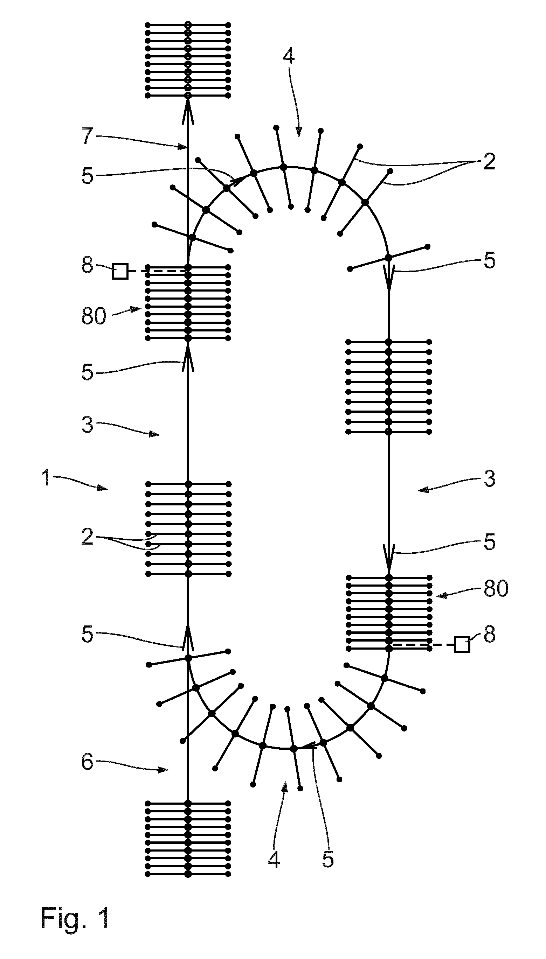

Ein in Fig. 1 als Ganzes mit 1 dargestelltes Transportsystem ermöglicht das Transportieren von Hängeartikeln 2. Das Transportsystem 1 ist im Wesentlichen als Umlauffördersystem ausgeführt und umfasst zwei Staubereiche 3 und zwei die Staubereiche 3 jeweils miteinander verbindende Förderbereiche 4. Die miteinander verbundenen Staubereiche 3 und Förderbereiche 4 bilden einen Endlos-Umlaufkurs. Die beiden Staubereiche 3 sind jeweils linear angeordnet. Die Förderbereiche 4 sind jeweils halbkreisförmig angeordnet. Entlang des Transportsystems 1 ist die im Uhrzeigersinn gerichtete Transportrichtung durch die Orientierung der Staubereiche 3 und der Förderbereiche 4 vorgegeben, also endlos umlaufend. Die Transportrichtung ist durch die Pfeile 5 angedeutet.

Das Transportsystem 1 umfasst einen Einlagerbereich 6, an dem Hängeartikel 2 in den Umlaufförderer, bestehend aus den beiden Staubereichen 3 und den Förderbereichen 4, eingelagert werden können. Der Einlagerbereich 6 ist insbesondere an einen Auslauf des in Fig. 1 unten dargestellten Förderbereichs 4 angeschlossen.

Weiterhin ist ein Auslagerbereich 7 vorgesehen, über den auszulagernde Hängeartikel 2 aus dem Umlaufförderer ausgelagert werden können. Zum Ein- bzw. Auslagern der Hängeartikel 2 sind im Bereich des Einlagerbereichs 6 bzw. des Auslagerbereichs 7 nicht näher dargestellte Weichenelemente vorgesehen.

Jeweils zwischen einem Staubereich 3 und einem Förderbereich 4 ist eine in Fig. 1 rein schematisch angedeutete Vereinzelungseinrichtung 8 vorgesehen. Die Vereinzelungseinrichtung definiert einen Vereinzelungsbereich 80. Entlang der Transportrichtung 5 ist der Vereinzelungsbereich 80 zwischen dem Staubereich 3 und dem Förderbereich 4 angeordnet. Mittels der Vereinzelungseinrichtung 8 sind die Hängeartikel 2 vereinzelbar. Die Vereinzelungseinrichtung 8 wird nachfolgend anhand von vier Ausführungsbeispielen im Detail erläutert.

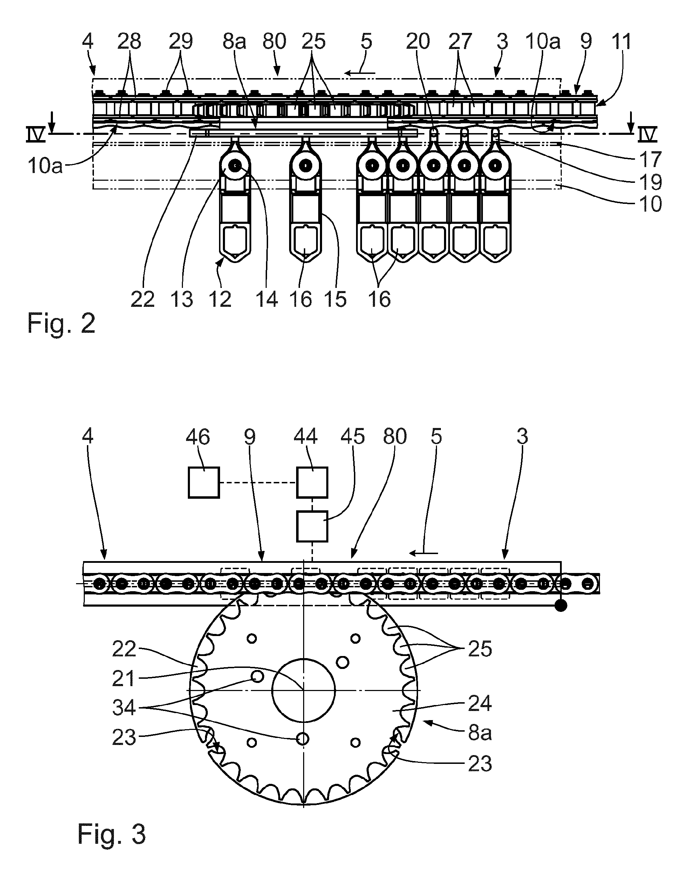

Anhand der Fig. 2, Fig. 3 und Fig. 4 wird eine erste Ausführungsvariante einer Vereinzelungseinrichtung 8a erläutert. In den Fig. 2, Fig. 3 und Fig. 4 ist auch ein Ausschnitt des die Transportrichtung 5 vorgebenden Transportmittels 9 dargestellt. Das Transportmittel 9 des Transportsystems 1 umfasst eine Transportschiene 10, die mittels geeigneter Trageinrichtungen in einem Raum verlegbar ist. Die Transportschiene 10 ist aus Gründen der Übersichtlichkeit in der Seitenansicht nach Fig. 2 lediglich gestrichelt angedeutet.

Über der vorzugsweise als Hohlkastenprofil ausgebildeten Transportschiene 10 ist eine Laufkette 11 angeordnet, die mittels nicht dargestellter Antriebsmittel in der im Wesentlichen horizontalen Transportrichtung 5 antreibbar ist. Bei der Laufkette 11 handelt es sich um eine metallische

Rollen-Kette, die Rollen 27 aufweist, die in geringem Abstand voneinander mittels Verbindungslaschen 28 und Bolzen 29 miteinander verbunden sind. Die Laufkette 11 ist derart angetrieben, dass sich die Rollen 27 entlang der Transportrichtung 5 bewegen. Ein Antrieb der Laufkette 11 kann beispielsweise durch einen an sich bekannten Antriebsmotor, beispielsweise Elektromotor oder dergleichen, erfolgen.

Die Ausschnittsdarstellung gemäß Fig. 2 zeigt den Staubereich 3 und den Förderbereich 4, wobei eine durch eine Strich-Punkt-Linie angedeutete Transportschiene 10 mit Laufkette 11 sowohl im Staubereich 3 als auch im Förderbereich 4 verläuft. Die Vereinzelungseinrichtung 8a trennt den Staubereich 3 und den Förderbereich 4 in Transportrichtung 5 voneinander.

Weiterhin sind Halteelemente 12 vorgesehen, die entlang der Transportschiene 10 transportierbar sind. Die Halteelemente 12 dienen zum Tragen der Hängeartikel 2. Das Fördern der Halteelemente 12 in Transportrichtung 5 zum Staubereich 3 erfolgt in der gezeigten Ausführungsvariante des Transportsystems 1 mittels eines Mitnehmers 10a. Der Mitnehmer 10a ist an einer Unterseite der Laufkette 11 den Halteelementen 12 zugewandt angeordnet. Der Mitnehmer 10a ist in vertikaler Richtung flach ausgeführt und erstreckt sich entlang der Transportrichtung 5. Der Mitnehmer 10a ist entlang der Transportrichtung 5 wellenartig ausgeführt mit mehreren Wellenbergen und Wellentälern, die periodisch abwechselnd, insbesondere sinusförmig, entlang der Transportrichtung 5 angeordnet sind. Der wellenartige Mitnehmer 10a ermöglicht eine aktive Förderung der Halteelemente 12 als kombinierte Reibschluss/Formschluss-Förderung.

Alternativ ist es auch denkbar, anstelle des Mitnehmers 10a das Fördern der Halteelement 12 in Transportrichtung 5 passiv, beispielsweise mittels Schwerkraft auszuführen. Die Förderbereiche 4 sind also als passive Rutschbereiche, welche zum Fördern mittels Schwerkraft geeignet sind, ausgeführt. Zu diesem Zweck ist die Transportschiene 10 in den Förderbereichen 4 gegenüber der Horizontalen geneigt.

Auf der Vereinzelungseinrichtung 8a ist entlang der Transportrichtung 5 ein weiterer wellenförmiger Mitnehmer 10a angeordnet. Die beiden Mitnehmer 10a sind identisch ausgeführt. Der in Fig. 2 links von der Vereinzelungseinrichtung 8a gezeigte Mitnehmer 10a dient zum Abtransport der Halteelemente 12 aus der Vereinzelungseinrichtung 8a.

Die Halteelemente 12 weisen jeweils Laufrollen 13 auf, die sich jeweils auf Führungsstegen der Transportschiene 10 abstützen und hierauf in Transportrichtung 5 abrollbar sind. Pro Halteelement 12 ist also ein Paar von Laufrollen 13 vorgesehen, die um eine gemeinsame Drehachse 14 drehbar sind, so dass das gesamte Halteelement 12 in der Transportschiene 10 um die Drehachse 14 drehen oder pendeln kann. Zwischen den Fühningsstegen der Transportschiene 10 ist ein sich in Transportrichtung 5 erstreckender unterer Schlitz ausgebildet, durch welchen ein flaches Tragteil 15 jedes Halteelements 12 nach unten aus der Transportschiene 10 herausragt. Das Tragteil 15 weist an seinem unteren Ende eine Aufnahmeöffnung 16 auf, in die ein Haken eines nicht dargestellten Bügels einhängbar ist, auf dem beispielsweise ein nicht dargestelltes, zu transportierendes Kleidungsstück oder eine Tasche als Hängeartikel 2 hängt.

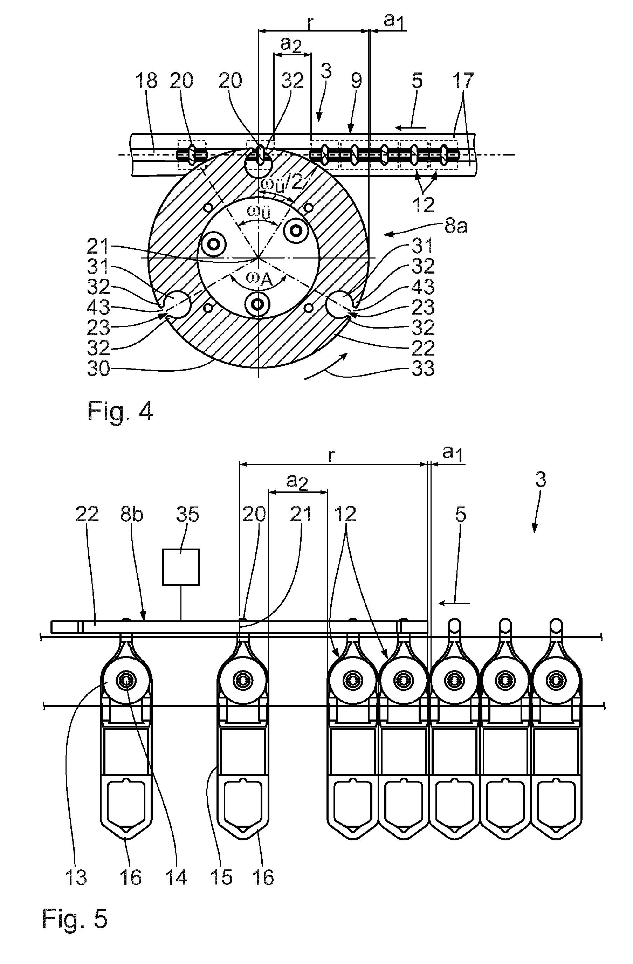

Die Transportschiene 10 weist unmittelbar oberhalb der Laufrollen 13 aufeinander zu gerichtete horizontale Begrenzungsstege 17 auf, die zwischen sich einen oberen Schlitz 18 begrenzen, welcher insbesondere der Schnittdarstellung nach Fig. 4 zu entnehmen ist. Durch diesen Schlitz 18 erstreckt sich ein stielartiger Ansatz 19 des Halteelements 12, der einstückig am oberen Ende des Tragteils 15 ausgebildet ist. Am oberen Ende des Ansatzes 19 ist ein Anschlag 20 nach Art eines Querriegels ausgebildet, dessen Erstreckung horizontal quer zur Transportrichtung 5 größer ist als die Breite des Schlitzes 18.

In Fig. 2 ist die Vereinzelungseinrichtung 8a in einer Seitenansicht und in Fig. 3 in einer Ansicht von oben gezeigt. Die Vereinzelungseinrichtung 8a umfasst ein um eine Rotationsachse 21 rotierbares Vereinzelungsrad 22 mit drei Vereinzelungsmitteln 23. Die Vereinzelungsmittel 23 sind somit auch um die Rotationsachse 21 rotierbar und können mit den Halteelementen 12 zusammenwirken. Die Vereinzelungsmittel 23 sind entlang einer Kreisbahn bewegbar. Das rotierende Vereinzelungsrad 22 ist horizontal angeordnet, wobei die Rotationsachse 21 des Vereinzelungsrades 22 sich quer zur Transportrichtung 5 erstreckt.

Das Vereinzelungsrad 22 ist drehfest mit einem Abtriebsmittel 24 in Form einer Abtriebsscheibe verbunden, welche ebenfalls um die Rotationsachse 21 drehbar ist und an ihrem Außenumfang Einkerbungen 25 aufweist, deren Kontur auf eine Außenkontur der Rollen 27 der Laufkette 11 abgestimmt ist.

Durch die Bewegung der Rollen 27 der Laufkette 11 in Transportrichtung 5 und das Ineinandergreifen der Rollen mit den Einkerbungen 25 der Abtriebsscheibe 24 ist die Abtriebsscheibe 24 in Rotation um die Rotationsachse 21 versetzbar. Da die Abtriebsscheibe 24 drehfest mit dem Vereinzelungsrad 22 verbunden ist, ist folglich auch die das Vereinzelungsrad 22 mit den Vereinzelungsmitteln 23 durch die Laufkette 11 in Rotation um die Rotationsachse 21 versetzbar. Eine derartige Anordnung ist besonders energieeffizient und ressourcensparend, da für die Vereinzelungseinrichtung 8a kein separater Antrieb notwendig ist.

Wie Fig. 3 zu entnehmen, steht das Vereinzelungsrad 22 in radialer Richtung bezüglich der Rotationsachse 21 über die Abtriebsscheibe 24 hervor. Hierdurch wird ein reibungsloses Zusammenwirken der Vereinzelungsmittel 23 mit den Halteelementen 12 gewährleistet.

Die Vereinzelungsmittel 23 sind äquidistant beabstandet zueinander bezüglich der Rotationsachse 21 angeordnet. Die Vereinzelungsmittel 23 weisen jeweils einen Winkelabstands ω_{A} bezüglich der Rotationsachse 21 zueinander auf. Der Winkelabstands ω_{A} beträgt bei der ersten Ausführungsvariante der Vereinzelungseinrichtung 8a jeweils 120°. Durch Rotation des Vereinzelungsrades 22 sind die Vereinzelungsmittel 23 relativ zum Transportmittel 9 bewegbar. Durch die äquidistante Beabstandung der Vereinzelungsmittel 23 zueinander wird ein taktweises Zusammenwirken der Vereinzelungsmittel 23 mit jeweils einem Halteelement 12 zur Bewegung des jeweiligen Halteelements 12 entlang der Transportrichtung 5 ermöglicht.

Wie insbesondere Fig. 4 zu entnehmen, sind die Vereinzelungsmittel 23 gemäß der ersten Ausführungsvariante der Vereinzelungseinrichtung 8a jeweils durch einen Durchbruch 31 am radialen Außenumfang des rotierenden Vereinzelungsrades 22 und durch jeweils zwei hakenförmige Vorsprünge 32 gebildet. Die hakenförmigen Vorsprünge 32 zeigen jeweils in Umfangsrichtung bezüglich der Rotationsachse 21.

Die Vereinzelungsmittel 23 sind jeweils identisch ausgebildet. Die Durchbrüche 31 der Vereinzelungsmittel 23 erstrecken sich jeweils von einer Außenkante 30 des Vereinzelungsrades 22 in Richtung der Rotationsachse 21. Wie insbesondere Fig. 4 zu entnehmen, erstrecken sich die Durchbrüche 31 in der Ausführungsvariante der Vereinzelungseinrichtung 8a um weniger als die Hälfte des Radius r des Vereinzelungsrades 22 von der Außenkante 30 nach innen in Richtung der Rotationsachse 21. Die Durchbrüche 31 weisen jeweils eine kreisförmige Kontur auf, die über eine Mitnahme-Nut 43 mit dem Äußeren verbunden sind.

Die Vereinzelungseinrichtung 8a ist derart in Bezug zum Transportmittel 9 angeordnet, dass bei Bewegung der Vereinzelungsmittel 23 entlang der Kreisbahn in einer Drehrichtung 33 jeweils genau ein Vereinzelungsmittel 23 mit einem Halteelement 12 zusammenwirkt. Das Halteelement 12 ist dabei von dem Vereinzelungsmittel 23 im Bereich des Anschlags 20 des Ansatzes 19 aufnehmbar. Durch das Vereinzelungsmittel 23 ist eine geführte Verlagerung des jeweiligen Halteelements 12 gewährleistet. Während seiner Bewegung entlang der Kreisbahn bewegt das jeweilige Vereinzelungsmittel 23 das jeweilige Haltelement 12 entlang der Transportrichtung 5 von einer unbestimmten Anordnung im Staubereich 3, in welcher ein erster Abstand a₁ zwischen zwei benachbarten Halteelementen 12 vorliegt, in eine vereinzelte Anordnung im Vereinzelungsbereich 80, in welcher ein zweiter, vorgegebener Abstand a₂ zwischen den zwei benachbarten Halteelementen 12 vorliegt. Der zweite Abstand a₂ ist gemäß der Darstellung größer als der erste Abstand a₁. Der zweite Abstand a₂ kann aber auch kleiner sein als der erste Abstand a₁.

In dem gezeigten Ausführungsbeispiel ist der erste Abstand a₁ insbesondere deshalb kleiner als der zweite Abstand a₂, da an den Halteelementen 12 keine Hängeartikel angeordnet sind. Die Halteelemente 12 sind unbestückt Das bedeutet, dass die Halteelemente 12 in dem Staubereich 3 gemäß Fig. 5 einen ersten Minimalabstand a₁ₘᵢₙ zueinander aufweisen. Sofern die Halteelemente 12 jeweils einen Hängeartikel 2 tragen, ist der erste Abstand a₁ in dem Staubereich 3 im Allgemeinen größer als der erste Minimalabstand a₁ₘᵢₙ, der sich aus der in Transportrichtung 5 orientierten Breite der Halteelemente 12 selbst ergibt. In jedem Fall ist der erste Abstand a₁ zwischen zwei benachbarten Halteelementen 12 in dem Staubereich 3 unbekannt und insbesondere unbestimmt. In einer derartigen Anordnung ist es nicht problemlos möglich, fehlerfrei und zuverlässig die Halteelemente 12 bzw. die daran befestigten Hängeartikel 2 zu identifizieren. Die in Fig. 4 entlang der Transportrichtung 5 im Staubereich 3 aufgereihten Halteelemente 12 weisen entsprechend den ersten Abstand a₁ auf.

Die Vereinzelungsmittel 23 greifen beim Zusammenwirken mit dem jeweiligen Halteelement 12 an dessen stielartigen Ansatz 19 im Bereich des Anschlags 20 an, wobei der jeweilige hakenförmige Vorsprung 32 mit dem Anschlag 20 in Kontakt bringbar ist. Während der Überführung des jeweiligen Halteelements 12 von der aufgereihten Anordnung in die vereinzelte Anordnung befindet sich der Anschlag 20 im Bereich der Mitnahme-Nut 43 zwischen den hakenförmigen Vorsprüngen 32 des Vereinzelungsmittels 23.

In der ersten Ausführungsvariante der Vereinzelungseinrichtung 8a wirkt jeweils ein Vereinzelungsmittel 23 während dessen Rotation in Drehrichtung 33 entlang des Winkelbereichs ω_{ü} mit einem Halteelement 12 zusammen. Die Abmessungen des Vereinzelungsmittels 23, insbesondere der Mitnahme-Nut 43, sind so auf die Anschläge 20 der Halteelemente 12 abzustimmen, dass das Vereinzelungsmittel 23 während dessen Rotation in Drehrichtung 33 das jeweilige Halteelement 12 aus der aufgereihten Anordnung automatisch aufnimmt und nach Erreichen der vereinzelten Anordnung automatisch freigibt. Zwischen Aufnahme und Freigabe des jeweiligen Halteelements 12 legt das Vereinzelungsmittel 23 eine Bewegung entlang des Winkels ω_{ü} in Bezug zur Rotationsachse 21 zurück.

Die Funktionsweise des Transportsystems 1 zum Transportieren von Hängeartikeln 2 mit der Vereinzelungseinrichtung 8a ist wie folgt:
Zunächst wird das Transportmittel 9 zum Transportieren der Hängeartikel 2 entlang der Transportrichtung 5 bereitgestellt. Dann werden Hängeartikel 2 über den Einlagerbereich 6 dem Transportsystem 1 zugeführt. Die Hängeartikel 2 werden zunächst an den Staubereich 3 übergeben. Ein Transportieren der Hängeartikel 2 entlang der Transportrichtung 5 hin zu dem Staubereich 3 erfolgt wie oben erläutert durch eine gegenüber der Horizontalen geneigten Anordnung der Transportschiene 10 des Transportmittels 9. Im Staubereich 3 weisen die Halteelemente 12 entlang der Transportrichtung 5 jeweils den Abstand a₁ zueinander auf. Der erste Abstand a₁ zwischen den Halteelementen 12 innerhalb des Staubereichs 3 kann unterschiedlich sein, insbesondere dann, wenn unterschiedliche Hängeartikel 2 an den Halteelementen 12 jeweils angeordnet sind. Ein Stauen der Halteelemente 12 und damit der Hängeartikel 2 erfolgt entweder mit Hilfe eines nicht dargestellten, geeigneten Staumittels, beispielsweise eines Stoppers, welches quer zur Transportrichtung 5 bewegbar ist oder lediglich dadurch, dass die Transportschiene 10 im Staubereich 3 horizontal verläuft. Für diesen Fall ist die Transportschiene 10 lediglich in einem Abschnitt zwischen Einlagerbereich 6 und Staubereich 3 gegenüber der Horizontalen geneigt.

Anschließend erfolgt ein Vereinzeln der Hängeartikel 2 durch Überführen der Hängeartikel 2 mittels der Vereinzelungseinrichtung 8a derart, dass zwischen zwei benachbarten Hängeartikeln 2 der vorgegebene zweite Abstand a₂ vorliegt. Wie oben bereits erläutert, wirken die Vereinzelungsmittel 23 der Vereinzelungseinrichtung 8a taktweise mit den Halteelementen 12 zusammen, wobei die Vereinzelungsmittel 23 jeweils ein Halteelement von der aufgereihten Anordnung, in welcher der erste Abstand a₁ zwischen zwei benachbarten Halteelementen 12 vorliegt, in die vereinzelte Anordnung, in welcher der Abstand a₂ zwischen zwei benachbarten Halteelementen 12 vorliegt, überführt.

Während ein Halteelement 12 von einem Vereinzelungsmittel 23 transportiert wird, liegt ein dem transportierten Halteelement 12 nachfolgendes Halteelement 12 im Staubereich 3 an einer Außenkante 30 des Vereinzelungsrads 22 an. Das Vereinzelungsrad 22 der Vereinzelungseinrichtung 8a erfüllt eine Rückhaltefunktion. Die Vereinzelungsmittel 23 der Vereinzelungseinrichtung 8a erfüllen jeweils eine Transportfumktion für die Halteelemente 12. Durch Weiterdrehen der Vereinzelungseinrichtung 8a entlang der Drehrichtung 33 wird das zuvor zurückgehaltene Halteelement 12 von einem nächsten Vereinzelungsmittel 23 aufgenommen und transportiert.

In der Ausführungsvariante der Vereinzelungseinrichtung 8a nach den Fig. 2 bis Fig. 4 weisen die Haltelemente 12 den Abstand a₂ auf, wenn sich ein mit einem Halteelement 12 zusammenwirkendes Vereinzelungsmittel 23 nach Aufnahme des jeweiligen Halteelements 12 um den Winkels ω_{ü} gedreht hat und das Vereinzelungsmittel 23 das jeweilige Halteelement 12 nach Erreichen der vereinzelten Anordnung wieder freigegeben hat. Fig. 4 zeigt ein durch ein Vereinzelungsmittel 23 bereits in die vereinzelte Anordnung überführtes Halteelement 12. Ferner zeigt Fig. 4 ein weiteres Halteelement 12, welches mit einem Vereinzelungsmittel 23 zusammenwirkt, wobei das Vereinzelungsmittel 23 nach Aufnahme dieses Halteelements 12 eine Bewegung entlang des Winkels ω_{ü}/2 zurückgelegt hat.

Durch den vorgegebenen definierten Abstand a₂ ist es möglich, ein Halteelement 12 in der vereinzelten Anordnung in dem jeweiligen Vereinzelungsmittel 23 auszulesen. Dazu dient die in Fig. 3 schematisch dargestellte Identifikationseinheit 44 mit einem Lesegerät 45, mit dem ein an dem Halteelement 12 angeordneter, den Hängeartikeln 2 zugeordneter Identifikationscode ausgelesen wird. Vorzugsweise erfolgt das Auslesen des Identifikationscodes des Halteelements 12 in der in Fig. 4 gezeigten 12-Uhr-Position an dem Vereinzelungsrad 22. Es ist auch denkbar, dass das Auslesen an einer anderen Position des Halteelements 12 erfolgt. Alternativ ist es auch möglich, den Identifikationscode während der Überführung des jeweiligen Halteelements 12 von der aufgereihten Anordnung in die vereinzelte Anordnung auszulesen.

Gemäß dem gezeigten Ausführungsbeispiel ist an den Halteelementen 12 als den Identifikationscode tragendes Mittel ein RFID-Chip vorgesehen. Die Identifikationseinheit 44 ist entsprechend als RFID-Leseeinheit ausgeführt. Es kann an den von den Halteelementen 12 getragenen Hängeartikeln 2 auch ein Transponder vorgesehen sein. Die Identifikationseinheit 44 ist dann als Transponderleser ausgebildet. Es sind auch alternative Ausführungen der Identifikationseinheit 44 möglich, wobei der Identifikationscode der Hängeartikel 2 entsprechend ausgeführt ist. Insbesondere ist ein dem Auslagerbereich 7 zugeordnetes Weichenelement und die Identifikationseinheit 44 mit einer Steuerungs-/Regelungseinrichtung 46 in Signalverbindung. Es ist möglich, das Weichenelement in Abhängigkeit des erkannten Identifikationscodes zu schalten, um insbesondere eine gezielte Entnahme eines oder mehrerer Hängeartikel 2 aus dem Umlaufförderer zu ermöglichen.

Wie oben anhand Fig. 1 erläutert, schließt sich in Transportrichtung 5 in Abhängigkeit einer Weichenstellung an den Staubereich 3 der Auslagerbereich 7 oder der Förderbereich 4 an. In Abhängigkeit der Gestaltung des Transportsystems 1 sind die Halteelemente 12 im Auslagerbereich 7 oder im Förderbereich 4 entweder aktiv weiterförderbar, beispielsweise durch Mitnahme mittels des Mitnehmers 10a an der Laufkette 11, oder der Auslagerbereich 7 bzw. Förderbereich 4 ist als passiver Schwerkraftförderer ausgebildet. Ein derartiger Schwerkraftförderer weist eine Neigung gegenüber der Horizontalen derart auf, dass die Halteelemente entlang des Schwerkraftförderers mittels der Schwerkraft automatisch gefördert werden. Ein aktiver Antrieb ist hierzu nicht erforderlich. Die Schwerkraftförderung ist dadurch begünstigt, dass die Halteelemente 12 mittels der Laufrollen 13 an einer dafür vorgesehenen Transportschiene des Schwerkraftförderers abrollen.

Der Abstand a₂ in der vereinzelten Anordnung ist durch Variation und Ausbildung der Vereinzelungsmittel 23 einstellbar. So ist der Abstand a₂ beispielsweise durch Veränderung des Winkelabstands ω_{A} der Vereinzelungsmittel 23 in Bezug zur Rotationsachse 21 veränderbar. So könnten beispielsweise verschiedene rotierbare Vereinzelungsräder 22 vorgesehen sein, die jeweils bedarfsweise an die Abtriebsscheibe 24 lösbar montierbar sind. Zu diesem Zweck ist das Vereinzelungsrad 22 mit der Abtriebsscheibe 24 über Befestigungsmittel 34 lösbar verbunden. Bei den Befestigungsmitteln 34 kann es sich beispielsweise um Schraubverbindungen oder ähnliches handeln.

Nachfolgend wird anhand Fig. 5, Fig. 6, Fig. 7 und Fig. 8 eine zweite Ausführungsvariante einer Vereinzelungseinrichtung 8b zur Verwendung in einem Transportsystem 1 nach Fig. 1 beschrieben. Konstruktiv unterschiedliche, aber gleichwirkende Teile im Vergleich zu der ersten Ausführungsvariante der Vereinzelungseinrichtung 8a erhalten die gleichen Bezugsziffern mit einem nachgestellten b. Identische Bauteile erhalten die gleichen Bezugsziffern.

Die Vereinzelungseinrichtung 8b unterscheidet sich von der Vereinzelungseinrichtung 8a in erster Linie dadurch, dass die Vereinzelungseinrichtung 8b keine Abtriebsscheibe aufweist. Wesentlicher Bestandteil der Vereinzelungseinrichtung 8b ist das Vereinzelungsrad 22, welches mit den Vereinzelungsmitteln 23 versehen ist. Das Vereinzelungsrad 22 und die Vereinzelungsmittel 23 sind identisch zu den entsprechenden Bauteilen der ersten Ausführungsvariante der Vereinzelungseinrichtung 8a ausgebildet.

Die Bewegung des Vereinzelungsrades 22 und damit der Vereinzelungsmittel 23 um die Rotationsachse 21 ist durch einen in Fig. 5 schematisch dargestellten Vereinzelungsantrieb 35 angetrieben. Bei dem Vereinzelungsantrieb 35 kann es sich beispielsweise um einen an sich bekannten Antriebsmotor, beispielsweise einen Elektromotor, handeln, welcher mittels einer Antriebswelle das Vereinzelungsrad 22 in Rotation um die Rotationsachse 21 versetzt. Alternativ könnte eine Kraftübertragung auch mittels einer Riemenanordnung verwirklicht sein. Die Bewegung der Vereinzelungsmittel 23 ist unabhängig von einem Antrieb des Transportmittels 9. Bei dieser Ausführungsvariante gemäß den Fig. 5 bis Fig. 8 der Vereinzelungseinrichtung 8b kann auf ein Transportmittel 9 mit einer Laufkette 11, wie anhand der Fig. 2 bis Fig. 4 beschrieben, verzichtet werden.

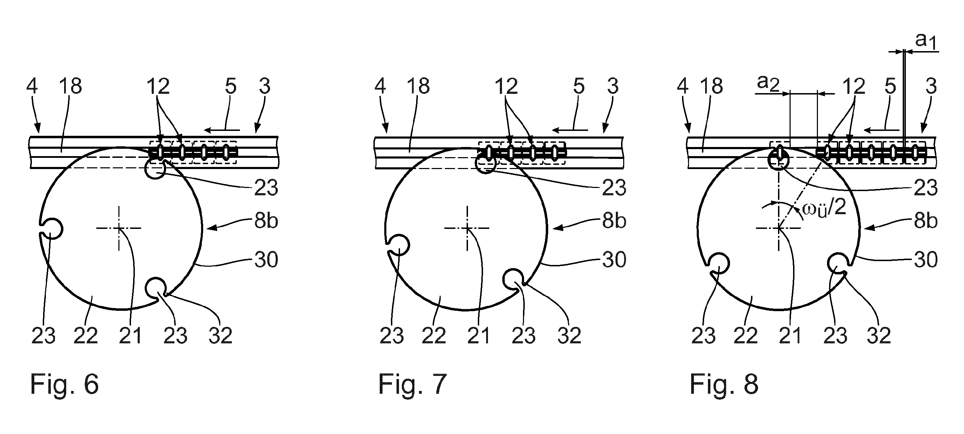

Die Funktionsweise der Vereinzelungseinrichtung 8b zur Überführung jeweils eines Halteelements 12 von der aufgereihten Anordnung in die vereinzelte Anordnung ist entsprechend der Funktionsweise der Vereinzelungseinrichtung 8a wie oben beschrieben. In den Fig. 6, Fig. 7 und Fig. 8 sind die unterschiedlichen Stufen des Zusammenwirkens eines Vereinzelungsmittels 23 mit einem Halteelement 12 dargestellt. Fig. 6 zeigt das im Staubereich 3 in Transportrichtung 5 vorderste Halteelement 12 in dem Moment, in dem das Halteelement 12 zu dem in Transportrichtung 5 benachbarten Halteelement 12 den Abstand a₁ aufweist und kurz bevor es von den hakenförmigen Vorsprüngen 32 eines Vereinzelungsmittel 23 ergriffen wird. In Fig. 7 ist das Halteelement 12 dann von dem Vereinzelungsmittel 23 ergriffen und durchsetzt die Mitnahme-Nut 43. Fig. 8 zeigt das Halteelement 12 nachdem dieses durch Mitnahme durch das Vereinzelungsmittel 23 entlang der Transportrichtung 5 den Weg a₂/2 zurückgelegt hat, wobei sich das Vereinzelungsmittel 23 dabei nach Aufnahme dieses Halteelements 12 um den Winkel ω_{ü}/2 gedreht hat.

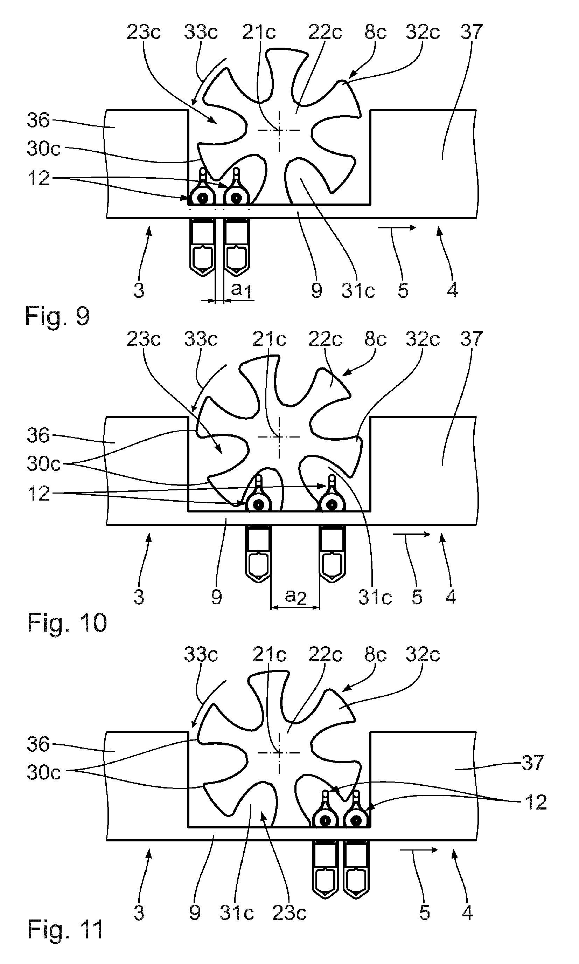

Nachfolgend wird anhand der Fig. 9, Fig. 10 und Fig. 11 eine dritte Ausführungsvariante einer Vereinzelungseinrichtung 8c zur Verwendung in einem Transportsystem 1 nach Fig. 1 beschrieben. Konstruktiv unterschiedliche, aber gleichwirkende Teile im Vergleich zu der ersten Ausführungsvariante der Vereinzelungseinrichtung 8a erhalten die gleichen Bezugsziffern mit einem nachgestellten c. Identische Bauteile erhalten die gleichen Bezugsziffern.

Ein wesentlicher Unterschied zwischen der dritten Ausführungsvariante der Vereinzelungseinrichtung 8c zu den vorhergehend beschriebenen Vereinzelungseinrichtungen 8a, 8b besteht darin, dass sich die Rotationsachse 21 c horizontal und quer zur Transportrichtung 5 erstreckt. Die Vereinzelungseinrichtung 8c ist oberhalb der Hängeartikel 2 und oberhalb des Transportmittels 9 angeordnet. Die vorstehend beschriebenen Vereinzelungseinrichtungen 8a, 8b sind seitlich des Transportmittels 9 und seitlich in Bezug zur Transportrichtung 5 angeordnet.

Die Vereinzelungseinrichtung 8c umfasst ein Vereinzelungsrad 22c, welches um die Rotationsachse 21c entlang der Drehrichtung 33c rotatorisch angetrieben ist. Ein Antrieb erfolgt durch einen in den Fig. 9, Fig. 10 und Fig. 11 nicht dargestellten Vereinzelungsantrieb. Bei dem Vereinzelungsantrieb kann es sich beispielsweise um einen an sich bekannten Antriebsmotor, beispielsweise einen Elektromotor, handeln.

Vereinzelungsmittel 23 umfassen Durchbrüche 31 c, wobei sich diese Durchbrechungen von einer Außenkante 30c radial in Richtung der Rotationsachse 21 c erstrecken. Gemäß der Ausführungsvariante gemäß den Fig. 9, Fig. 10 und Fig. 11 umfasst das Vereinzelungsrad 22c der Vereinzelungseinrichtung 8c sechs Vereinzelungsmittel 23c, welche äquidistant beabstandet zueinander bezüglich der Rotationsachse 21 c angeordnet sind. In Umfangsrichtung in Bezug zur Rotationsachse 21c sind jeweils zwei Durchbrüche 31 c durch einen sich radial von der Rotationsachse 21 c weg erstreckenden Vorsprung 32c getrennt.

Fig. 9 zeigt zwei Halteelemente 12, die im Staubereich 3 mit einem Abstand a₁ in Transportrichtung 5 zueinander angeordnet sind. Mittels der Vereinzelungseinrichtung 8c sind die Halteelemente 12 in Transportrichtung 5 von einer ersten Verarbeitungsstation 36 in eine zweite Verarbeitungsstation 37 beförderbar, wobei in Transportrichtung 5 zwischen erster Verarbeitungsstation 36 und zweiter Verarbeitungsstation 37 eine Vereinzelung der Hängeartikel 2 bzw. der Halteelemente 12 stattfindet. Fig. 9 zeigt das Vereinzelungsrad 22c unmittelbar bevor dieses mit dem in Transportrichtung 5 im Staubereich 3 in vorderster Position angeordneten Halteelement 12 zusammenwirkt. Dieses Halteelement 12 durchsetzt bereits bereichsweise einen Durchbruch 31 c zwischen zwei Vorsprüngen 32c.

In Fig. 10 hat sich das Vereinzelungsrad 22c bereits um einen Winkel von 60° um die Rotationsachse 21 c gedreht, wodurch ein erstes Vereinzelungsmittel 23c über die Vorsprünge 32c mit dem ersten Halteelement 12 in Kontakt getreten ist und dieses entlang der Transportrichtung 5 linear befördert hat. Durch Rotation des Vereinzelungsrades 22c in Drehrichtung 33c hat das in Drehrichtung 33c dem ersten Vereinzelungsmittel 23c benachbarte zweite Vereinzelungsmittel 23c das zweite Halteelement 12 ergriffen und ebenfalls bereits bereichsweise entlang der Transportrichtung 5 mitgenommen. Durch die Gestaltung des Vereinzelungsrades 22c ist es also ermöglicht, dass zeitgleich zwei Vereinzelungsmittel 23 mit jeweils einem Halteelement 12 zusammenwirken und dieses von einer aufgereihten Anordnung in eine vereinzelte Anordnung überführen. In der Anordnung gemäß Fig. 10 weisen die Halteelemente 12 entlang der Transportrichtung 5 den Abstand a₂ zueinander auf. In dieser Anordnung ist es möglich, dass eine Identifikationseinheit aus den Hängeartikeln 2 wie oben anhand Vereinzelungseinrichtung 8a erläutert einen Identifikationscode ausliest. In Abhängigkeit des ausgelesenen Identifikationscodes ist der jeweilige Hängeartikel 2 in der zweiten Verarbeitungsstation 37 weiter verarbeitbar. Es ist möglich, die zweite Weiterverarbeitungsstation 37 in Abhängigkeit des erkannten Identifikationscodes anzusteuern. Bei der Weiterverarbeitungsstation 37 kann es sich beispielsweise um eine Entnahmestation oder eine Verpackungsstation handeln. Fig. 11 zeigt die Halteelemente 12 wieder in einer Anordnung, in welcher diese wieder mit dem ersten Abstand a₁ zueinander beabstandet sind. Vorzugsweise fördert der jeweilige Vorsprung 32c durch dessen Rotation die Halteelemente 12 entlang der Transportrichtung 5 in die zweite Verarbeitungsstation 37.

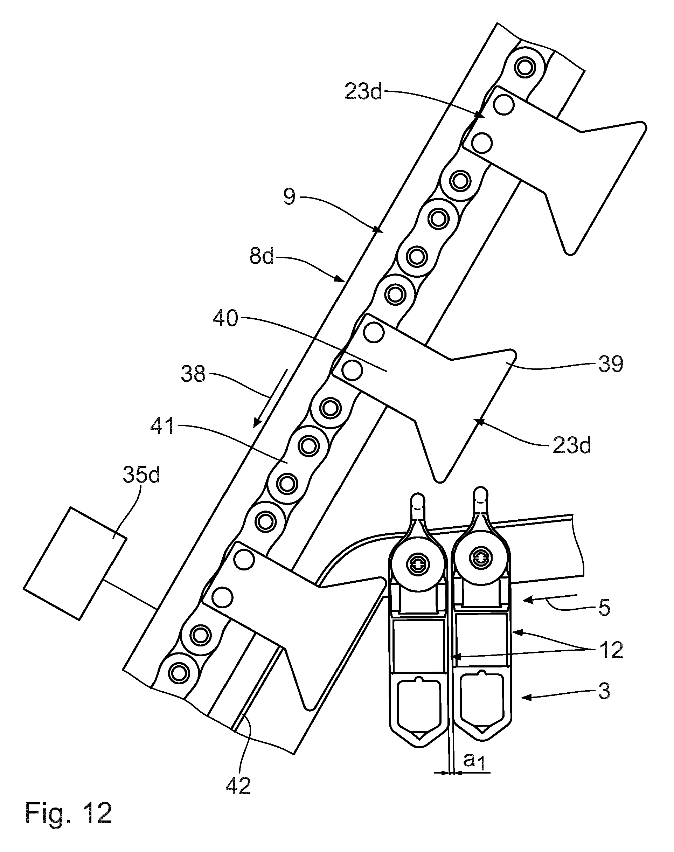

Anhand der Fig. 12, Fig. 13 und Fig. 14 wird eine vierte Ausführungsvariante einer Vereinzelungseinrichtung 8d beschrieben. Konstruktiv unterschiedliche, aber gleichwirkende Teile im Vergleich zu der ersten Ausführungsvariante der Vereinzelungseinrichtung 8a erhalten die gleichen Bezugsziffern mit einem nachgestellten d. Identische Bauteile erhalten die gleichen Bezugsziffern.

Die Vereinzelungseinrichtung 8d unterscheidet sich von den vorstehend erläuteten Vereinzelungseinrichtungen 8a, 8b, 8c dadurch, dass Vereinzelungsmittel 23d entlang einer linearen Vereinzelungsrichtung 38 zum Zusammenwirken mit den Halteelementen 12 bewegbar sind.

Die Vereinzelungsmittel 23d sind gemäß der Ausführungsvariante der Vereinzelungseinrichtung 8d als annähernd T-förmige Mitnehmer ausgebildet, umfassend einen Quersteg 39 zum Zusammenwirken mit den Halteelementen 12 und einen Längssteg 40, der an einer Vereinzelungsmittel-Transporteinrichtung 41 der Vereinzelungseinrichtung 8d befestigt ist. Die Transporteinrichtung 41 ist vorzugsweise als Förderkette ausgebildet, an welcher die Vereinzelungsmittel 23d lösbar montiert sind. Die Vereinzelungsmittel-Transporteinrichtung 41 weist vorzugsweise einen Vereinzelungsantrieb 35d auf, der in den Fig. 12, Fig. 13 und Fig. 14 schematisch dargestellt ist. Bei dem Vereinzelungsantrieb 35d kann es sich beispielsweise um einen an sich bekannten Antriebsmotor, beispielsweise einen Elektromotor, handeln.

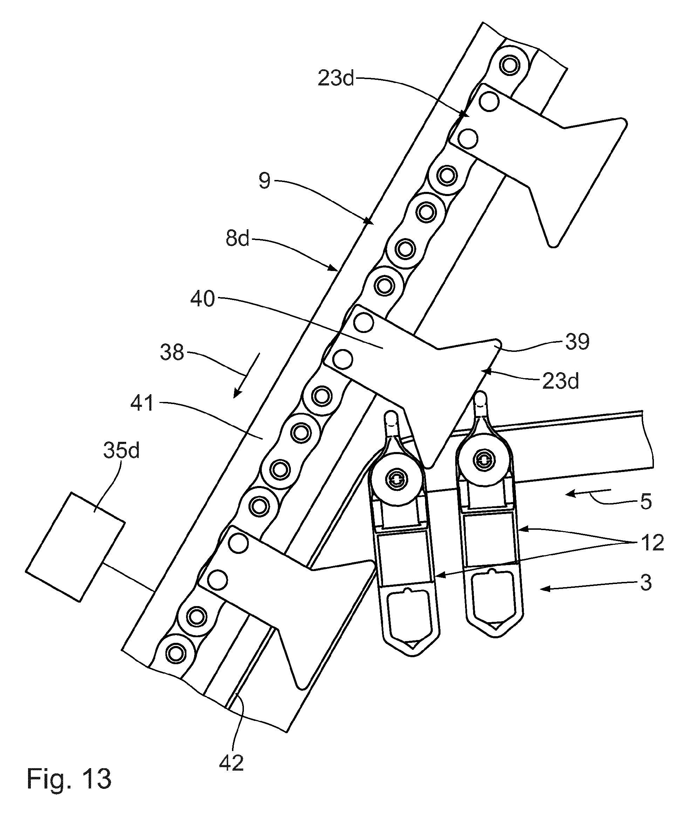

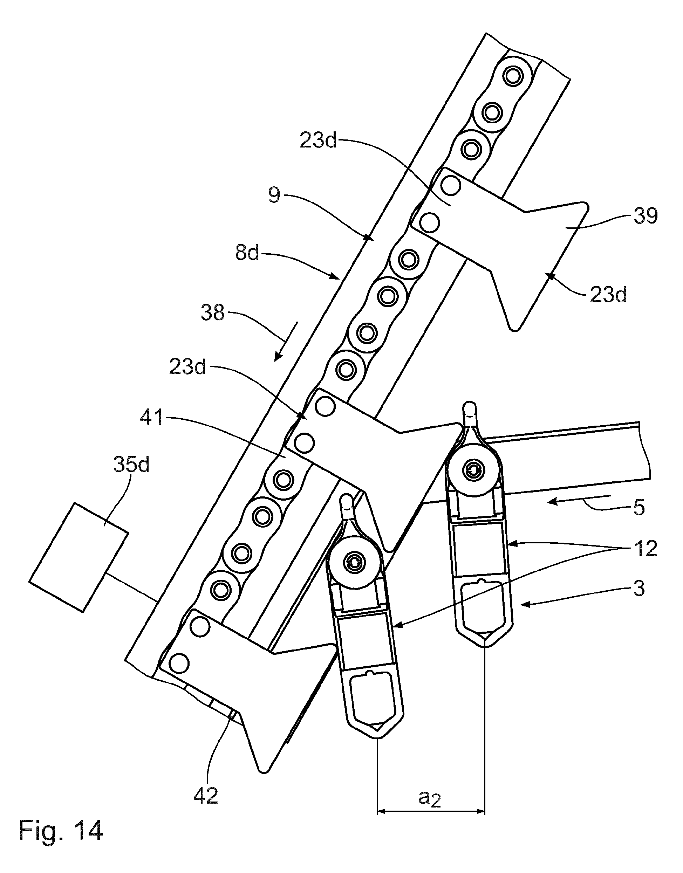

In Fig. 12 sind die Halteelemente 12 im Staubereich 3 gezeigt, wobei die Halteelemente 12 in Transportrichtung 5 den Abstand a₁ zueinander aufweisen. Zur Überführung eines Halteelements 12 von einer aufgereihten Anordnung in eine vereinzelte Anordnung wirkt das Halteelement 12, wie in Fig. 13 gezeigt, zeitgleich mit zwei in Transportrichtung 5 benachbarten Halteelementen 12 zusammen, wobei ein erstes Halteelement 12 in Transportrichtung 5 beförderbar ist und ein zweites Halteelement 12 in der aufgereihten Position haltbar ist. Durch die Bewegung der Vereinzelungsmittel 23d entlang der Vereinzelungsrichtung 38 wird das erste Halteelement 12 in Transportrichtung 5 kurzzeitig mitgenommen, wobei das Halteelement 12 dabei auf eine geneigte Bahn 42 beförderbar ist, wo es durch Schwerkrafteinfluss entlang der Transportrichtung 5 weiter befördert wird. Wie Fig. 14 zu entnehmen, weisen die Halteelemente 12, kurz bevor das erste Halteelement 12 die geneigte Bahn 42 betritt, den zweiten Abstand a₂ auf, wodurch eine Identifikationseinheit entsprechend den oben beschriebenen Ausführungsvarianten einen Identifikationscode aus dem jeweiligen Hängeartikel 2 auslesen kann.

Alle vier Ausführungsvarianten der Vereinzelungseinrichtung 8a, 8b, 8c, 8d haben die Wirkung, dass eine höhere Vereinzelungsleistung im Vergleich zu bekannten Vereinzelungseinrichtungen erreichbar ist. Die Vereinzelungsleistung kann durch Ansteuerung der jeweiligen Vereinzelungsmittel 23a, 23b, 23c, 23d jeweils quasi beliebig eingestellt werden. Die jeweils zu verwendende Vereinzelungseinrichtung 8a, 8b, 8c, 8d orientiert sich nach der räumlichen Gestaltung des Transportsystems 1.

## Patentansprüche

1. Transportsystem zum Transportieren von Hängeartikeln (2) umfassend
- ein eine Transportrichtung (5) vorgebendes Transportmittel (9),
- mehrere entlang der Transportrichtung (5) an dem Transportmittel (9) transportierbare Halteelemente (12), die als Hängeadapter zum Aufnehmen von Hängeartikeln (2) dienen, und
- mindestens eine Vereinzelungseinrichtung (8a; 8b; 8c; 8d) zum Vereinzeln der Halteelemente (12), wobei
-- die Vereinzelungseinrichtung (8a; 8b; 8c; 8d) mindestens ein Vereinzelungsmittel (23a; 23b; 23c; 23d) aufweist,
-- jeweils ein Vereinzelungsmittel (23a, 23b, 23c, 23d) mit mindestens einem Halteelement (12) zur Überführung von einer unbestimmten Anordnung in eine vereinzelte Anordnung des Halteelements (12) zusammenwirkt,
-- in der vereinzelten Anordnung ein vorgegebener Abstand (a₂) zwischen zwei benachbarten Halteelementen (12) vorliegt.

2. Transportsystem nach Anspruch 1, **dadurch gekennzeichnet, dass** die Vereinzelungseinrichtung (8a; 8b; 8c; 8d) derart ausgebildet ist, dass sie taktweise mit den Halteelementen (12) zusammenwirkt und diese entlang der Transportrichtung (5) bewegt.

3. Transportsystem nach Anspruch 1 oder 2, **dadurch gekennzeichnet, dass** das mindestens eine Vereinzelungsmittel (23a; 23b; 23c; 23d) relativ zum Transportmittel (9) bewegbar ist.

4. Transportsystem nach einem der vorstehenden Ansprüche, **dadurch gekennzeichnet, dass** die Bewegung des mindestens einen Vereinzelungsmittels (23a; 23b; 23c; 23d) durch einen Vereinzelungsantrieb (35) angetrieben ist.

5. Transportsystem nach einem der vorstehenden Ansprüche, **dadurch gekennzeichnet, dass** die Vereinzelungseinrichtung (8a) ein Abtriebsmittel (24) umfasst, welches mit dem Transportmittel (9) ineinandergreift, wodurch die Bewegung des mindestens einen Vereinzelungsmittels (23a) von einem Antrieb des Transportmittels (9) ableitbar ist.

6. Transportsystem nach einem der vorstehenden Ansprüche, **dadurch gekennzeichnet, dass** die Vereinzelungseinrichtung (8a; 8b; 8c) mindestens ein um eine Rotationsachse (21) rotierbares Vereinzelungsmittel (23a; 23b; 23c) zum Zusammenwirken mit den Halteelementen (12) aufweist.

7. Transportsystem nach Anspruch 6, **dadurch gekennzeichnet, dass** das mindestens eine Vereinzelungsmittel (23a; 23b; 23c) entlang einer Kreisbahn bewegbar ist.

8. Transportsystem nach Anspruch 6 oder 7, **dadurch gekennzeichnet, dass** die Vereinzelungseinrichtung (8a; 8b; 8c) mindestens zwei Vereinzelungsmittel (23a; 23b; 23c) umfasst, welche äquidistant beabstandet zueinander bezüglich der Rotationsachse (21) angeordnet sind.

9. Transportsystem nach einem der vorstehenden Ansprüche, **dadurch gekennzeichnet, dass** die Vereinzelungseinrichtung (8d) mindestens ein entlang einer im Wesentlichen linearen Vereinzelungsrichtung (38) bewegbares Vereinzelungsmittel (23d) zum Zusammenwirken mit den Halteelementen (12) aufweist.

10. Transportsystem nach einem der vorstehenden Ansprüche, **dadurch gekennzeichnet, dass** die Vereinzelungsmittel (23c; 23d) jeweils zeitgleich mit zwei in Transportrichtung (5) benachbarten Haltelementen (12) zusammenwirken, wobei ein erstes Haltelement (12) in Transportrichtung (5) beförderbar ist und ein zweites Halteelement (12) in der aufgereihten Position haltbar ist.

11. Verfahren zum Transportieren von Hängeartikeln (2) umfassend die Verfahrensschritte
a. Bereitstellen eines Transportmittels (9) zum Transportieren von Halteelementen (12), die als Hängeadapter dienen, die zum Aufnehmen von Hängeartikeln (2) dienen,
b. Transportieren der Halteelemente (12) entlang einer Transportrichtung (5) zu einer Vereinzelungseinrichtung (8a; 8b; 8c; 8d),
c. Vereinzeln der Halteelemente (12) durch Überführen der Hängeartikel (2) mittels der Vereinzelungseinrichtung (8a; 8b; 8c; 8d) derart, dass zwischen zwei benachbarten Hängeartikeln (2) ein vorgegebener Abstand (a₂) vorliegt.

12. Verfahren nach Anspruch 11, **dadurch gekennzeichnet, dass** die Vereinzelungseinrichtung (8a; 8b; 8c; 8d) taktweise mit den Halteelementen (12) zusammenwirkt und diese entlang der Transportrichtung (5) von einer unbestimmten Anordnung, in welcher ein erster, unbestimmter Abstand (a₁) zwischen zwei benachbarten Halteelementen (12) vorliegt, in eine vereinzelte Anordnung, in welcher der vorgegebene Abstand (a₂) zwischen den zwei benachbarten Haltelementen (12) vorliegt, überführt.

13. Verfahren nach Anspruch 11, **dadurch gekennzeichnet, dass** die Bewegung der Vereinzelungseinrichtung (8a; 8b; 8c; 8d) von einem Antrieb des Transportmittels (9) angetrieben wird.

14. Verfahren nach einem der Ansprüche 11 bis 13, **dadurch gekennzeichnet, dass** eine Rotation der Vereinzelungseinrichtung (8a; 8b; 8c) eine lineare Bewegung der Halteelemente (12) entlang der Transportrichtung (5) bewirkt.
